# EUROPEAN PATENT APPLICATION

(11) **EP 3 351 857 A1**
(43) Date of publication of application: **25.07.2018**
(21) Application number: 17151948.1
(22) Date of filing: 18.01.2017
(51) Int. Cl.: F24C 7/08, H04L 12/28

(54) **SYSTEM FOR PREPARING AND/OR PERFORMING AN AUTOMATIC COOKING PROCESS**

(71) Applicant: Electrolux Appliances Aktiebolag, 105 45 Stockholm (SE)
(72) Inventor: REUL, Kurt, 91541 Rothenburg ob der Tauber (DE); HOFFMANN, Harald, 91541 Rothenburg ob der Tauber (DE); HÄUTLE, Ulrich, 91541 Rothenburg ob der Tauber (DE)
(74) Representative: Electrolux Group Patents

(57) **Abstract**

The present invention relates to a system for preparing and/or performing an automatic cooking process. The system is adapted to at least one user. The system comprises at least one communication device (10) and at least one automatic or semi-automatic cooking appliance (12). The cooking temperatures, cooking powers and/or cooking times of the cooking process are automatically controllable. The communication device (10) and the cooking appliance (12) are interconnected via at least one signal connection. The communication device (10) includes or has access to individual personal data of the user. The individual personal data of the user relates to the nutrition, tastes and/or health situation of said user. The system comprises at least one automatic or semi-automatic conveying means, preferably a robot, for positioning and removing cookware in and/or on the cooking appliance (12) and/or for delivering food to the cookware. Further, the present invention relates to a method for preparing and/or performing an automatic cooking process.

## Description

The present invention relates to a system for preparing and/or performing an automatic cooking process. Further, the present invention relates to a method for preparing and/or performing an automatic cooking process.

Prepared food should be compatible with the preferences of the consumer. The prepared food should fulfil the consumer's taste as well as the health situation of the consumer. The prepared food is characterised by a lot properties. Individual food may be prepared by a manual cooking process. In contrast, automatic cooking processes usually provide standardised food. Often, said standardised food does not fulfil the consumer's taste. Further, the personal health situation of the consumer is not considered in the cooking processes providing standardised food.

It is an object of the present invention to provide a system and a method for preparing and/or performing an automatic cooking process, which provides food individually prepared for a user.

The object is achieved by the system for preparing and/or performing an automatic cooking process according to claim 1.

According to the present invention a system for preparing and/or performing an automatic cooking process is provided, wherein:
- the system is adapted to at least one user,
- the system comprises at least one communication device,
- the system comprises at least one automatic or semi-automatic cooking appliance,
- the cooking temperatures, cooking powers and/or cooking times of the cooking process are automatically controllable,
- the communication device and the cooking appliance are interconnected via at least one signal connection,
- the communication device includes or has access to individual personal data of the user,
- the individual personal data of the user relates to the nutrition, tastes and/or health situation of said user, and
- the system comprises at least one automatic or semi-automatic conveying means, preferably a robot, for positioning and removing cookware in and/or on the cooking appliance and/or for delivering food to the cookware.

The core of the system according to the present invention is the adaption of the cooking process and the resulting food to the individual requirements of the user. In particular, the cooking process depends on the nutrition, tastes and/or health situation of the user.

Preferably, the communication device includes at least one output unit, at least one input unit and/or at least one combined output-input unit.

For example, the communication device is a personal computer, a laptop, a notebook, a smartphone or a cellular phone or the like.

In particular, the cooking appliance is or includes at least one cooking oven, cooking hob, microwave oven, steamer, 3D printer and/or the like.

Further, the individual personal data of the user may include information about the relationship between the energy fed to the human body and the energy spent by workout and living of said human body. For example, the energy spent by the user may be detected by a movement detector or pedometer wirelessly connected to the communication device. The movement detector or pedometer may be an integrated part of a watch carried by the user. The system is able to recognise and control, if the human body is gaining weight, keeping weight or reducing weight. The weight is gained, if the energy fed to the human body is more than the energy spent by said human body. The weight is kept, if the energy fed to the human body is in balance with the energy spent by said human body. The weight is reduced, if the energy fed to the human body is less than the energy spent by said human body. Preferably, the individual personal data of the user includes the blood pressure, pulse, weight, body fat relation, energy consumed by food during last days and/or workouts of said user.

Moreover, the individual personal data of the user may include the user's taste, a table listing the kinds of food and/or ingredients, which the user likes and/or dislikes, and/or the nutrition of said user.

Additionally, the system may comprise at least one store for storing a stock of food, wherein preferably the conveying means delivers food from said store to the cookware.

In particular, the system comprises at least one reading device for reading a label identifying the food. For example, said reading device is a scanner, and the label includes a barcode or is an RFID tag.

The object is further achieved by the method for preparing and/or performing an automatic cooking process according to claim 8.

According to the present invention a method for preparing and/or performing an automatic cooking process is provided, wherein:
- the method is adapted to at least one user,
- the method is controlled by at least one communication device,
- the cooking process is performed by at least one automatic or semi-automatic cooking appliance,
- the cooking temperatures, cooking powers and/or cooking times of the cooking process are automatically controlled,
- the communication device and the cooking appliance are interconnected via at least one signal connection,
- individual personal data of the user are used for preparing and/or performing the automatic cooking process,
- the individual personal data of the user relates to the nutrition, tastes and/or health situation of said user,
- the cookware is positioned and/or removed in and/or on the cooking appliance by automatic or semi-automatic conveying means, and
- the food is delivered by automatic or semi-automatic conveying means.

The core of the method according to the present invention is the adaption of the cooking process and the resulting food to the individual requirements of the user. In particular, the cooking process depends on the nutrition, tastes and/or health situation of the user.

Preferably, the method is controlled by a personal computer, a laptop, a notebook, a smartphone or a cellular phone or the like.

In particular, the cooking process is performed by at least one cooking oven, cooking hob, microwave oven, steamer and/or the like.

In the beginning, the food and its properties may be selected by the user via the communication device.

For example, the preparing and/or performing of the automatic cooking process bases on information about the relationship between the energy fed to the human body and the energy spent by workout and living of said human body. For example, the energy spent by the user may be detected by a movement detector or pedometer wirelessly connected to the communication device. The movement detector or pedometer may be an integrated part of the watch. The method is able to recognise and/or control, if the human body is gaining weight, keeping weight or reducing weight. The weight is gained, if the energy fed to the human body is more than the energy spent by said human body. The weight is kept, if the energy fed to the human is in balance with the energy spent by said human body. The weight is reduced, if the energy fed to the human body is less than the energy spent by said human body. Preferably, the preparing and/or performing of the automatic cooking process bases on the blood pressure, pulse, weight, body fat relation, energy consumed by food during last days and/or workouts of said user.

Further, the preparing and/or performing of the automatic cooking process may base on the user's taste, a table listing the kinds of food and/or ingredients, which the user likes and/or dislikes, and/or the nutrition of said user.

Moreover, the stock of food may be stored and administrated, wherein preferably the food is delivered from said store to the cookware by the conveying means. In particular, information about the tenableness of the food is accessible by the communication device.

At last, a shopping list may be automatically created on the basis of the stock of food in the store.

Novel and inventive features of the present invention are set forth in the appended claims.

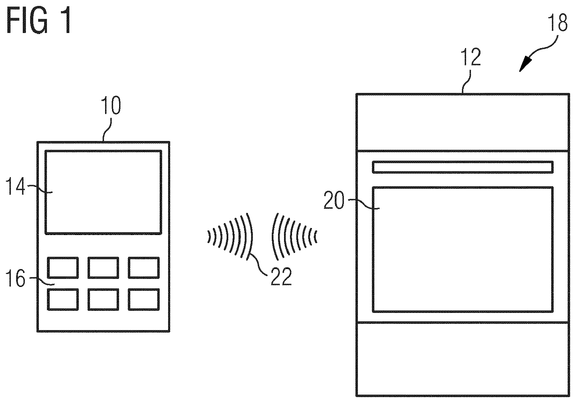

The present invention will be described in further detail with reference to the drawing, in which
- FIG 1: illustrates a schematic representation of a system for preparing and performing a cooking process according to a preferred embodiment of the present invention.

FIG 1 illustrates a schematic representation of a system for preparing and/or performing an automatic cooking process according to a preferred embodiment of the present invention.

The system according to the preferred embodiment comprises a communication device 10 and a cooking appliance 12. In general, the system may comprise at least one communication device 10, one or more cooking appliances 12 and optionally further domestic appliances. The communication device 10 is stationary or mobile. Preferably, the communication device 10 is wearable. For example, the communication device 10 is a personal computer, a laptop, a notebook, a smartphone or a cellular phone. The communication device 10 is connected to the cooking appliance 12 by a wired or wireless signal connection 22. Additionally, the communication device 10 and/or the cooking appliance 12 may be connected to the internet. The cooking appliance 12 is an automatic or semi-automatic device. For example, the cooking appliance 12 is a cooking oven, a cooking hob, a microwave oven or a steamer. The cooking appliance 12 may include a 3D printer. Preferably, the dishes are used as cookware and also as dinnerware.

The communication device 10 may be connected to the further domestic appliances. For example, the communication device 10 is connected or connectable to a refrigerator, a freezer and/or other storages of food, so that the communication device 10 contains or has access to information about the stock of food. The connection between the communication device 10 and the further domestic appliances allows obtaining additional information about the user. For example, information about the preferred temperature and/or ambient light of the user may be obtained.

The communication device 10 includes an output unit 14 and an input unit 16. In this example, the output unit 14 is formed as a display, while the input unit 16 includes a plurality of keys. Alternatively, the output unit 14 and input unit 16 may be formed as a touch screen. In general, the communication device 10 may include an arbitrary output unit 14 and input unit 16.

An important function of the system is that the user can order food by the communication device 10, while said ordered food is automatically or semi-automatically prepared by the at least one cooking appliance 12. Preferably, ingredients of the ordered food are automatically or semi-automatically delivered from the refrigerator, the freezer and/or other storages of food to the cooking appliance 12. The communication device 10 may present a menu like in a restaurant.

In this embodiment, the cooking appliance 12 includes a cooking hob 18 and a cooking oven 20, wherein said cooking hob 18 is arranged above the cooking oven 20, so that the cooking hob 18 and the cooking oven 20 form a compact unit. The cooking processes on the cooking hob 18 and in the cooking oven 20 are controlled automatically. In particular, the temperature, the power and/or the cooking time of the cooking processes on the cooking hob 18 and in the cooking oven 20 are controlled automatically. The communication device 10 and/or the cooking appliance 12 may include one or more programs for controlling the cooking process. The cooking process may be programmed at an arbitrary time, while said cooking process is prepared and/or performed at a later time. For example, hungry kids coming from school get the prepared food, while their parents are still working and/or absent.

The cooking appliance 12 may include means for positioning, repositioning and removing the cookware. The cookware can be automatically placed on the cooking hob 18 and in the cooking oven 20 and replaced from there. For example, the cooking appliance 12 includes a robot for conveying the cookware.

Further, the cooking appliance 12 may include means for conveying the food into the cookware and/or removing said food from the cookware. Moreover, the cooking appliance 12 may include means for conveying the food from the cookware to the dinner ware. Alternatively, the cookware may be used as dinnerware.

In particular, the cooking appliance 12 may include or be connected to one or more devices for storing food. For example, the food may be stored in a refrigerator. According to another example, the food may be provided as dry food. The stored food may be dry food, frozen food, liquid food and the like. The food may be conveyed automatically, e.g. by the robot, from the devices for storing food to the cookware. Further, water and/or spices may be added to food. The devices for storing food include a controlled outlet. The amount of the food and/or the ingredients is calculated by the communication device 10 or the cooking appliance 12. Further, information about the tenableness of the food is accessible by the communication device 10, so that waste of addled food is avoided. For example, the communication device 10 presents one or more food suggestions to the user by considering the tenableness of the available food.

The cooking appliance 12 may include a reading device, e.g. a scanner, for reading a label identifying the food. For example, said label may include a barcode. Further, the label may be an RFID tag. In a similar way, the refrigerator, the freezer and the other storages of food may include the reading device for reading the label identifying the food.

The user operates the communication device 10, wherein the user may be in front of the cooking appliance 12 or distant from said cooking appliance 12. The communication device 10 identifies the user. The communication device 10 receives information about the user. Said information is stored in a memory of the communication device 10 or provided by a data base via the internet. Preferably, the current and past nutrition and/or dishes of the user are considered. The user can order food by operating the communication device 10. Preferably, the food is selected by the input unit 16, wherein a table of an assortment of food is represented by the output unit 14.

The information about the user may include the individual health situation of said user. For example, the personal heath data may include the blood pressure, pulse, weight, body fat relation, energy consumed by food during last days, workouts and the like of the user. Further, the information may include the user's taste. For example, the information includes a table listing the kinds of food and/or ingredients, which the user likes and/or dislikes. Moreover, the information may include the user's preference, e.g. the ambient temperature or the ambient light. In particular, the personal health data may include the nutrition of the user. Moreover, the feedback of the user may be input to the communication device 10 in order to update the individual information about the user.

Further, the information about the user may include the relationship between the energy fed to the human body and the energy spent by workout and living of said human body. For example, the energy spent by the user may be detected by a movement detector or pedometer wirelessly connected to the communication device 10. The movement detector or pedometer may be an integrated part of a watch. The system and the method are able to recognise and/or control, if the human body is gaining weight, keeping weight or reducing weight. The weight is gained, if the energy fed to the human is more than the energy spent by said human body. The weight is kept, if the energy fed to the human is in balance with the energy spent by said human body. The weight is reduced, if the energy fed to the human is less than the energy spent by said human body.

The information about the user and her behaviour may be obtained by different ways. For example, the communication device 10 receives said information from the one or more cooking appliances 12 and/or from the further domestic appliances. The energy fed to the human body may be obtained by manual or automatic inputting of food ordered in a restaurant.

Moreover, the communication device 10 may administer the stock of food. This allows an automatic creation of a shopping list. The administration of the stock of food prevents that food deteriorates, so that no food has to be wasted.

The system for preparing and/or performing the automatic cooking process according to the present invention may be provided for a private household. In particular, the inventive system for preparing and/or performing the automatic cooking process is provided for a hospital, a rest home, a nursing home, catering business and the like. The inventive system may provide individual information about the patient or customer, respectively.

Although an illustrative embodiment of the present invention has been described herein with reference to the accompanying drawings, it is to be understood that the present invention is not limited to that precise embodiment, and that various other changes and modifications may be affected therein by one skilled in the art without departing from the scope or spirit of the invention. All such changes and modifications are intended to be included within the scope of the invention as defined by the appended claims.

### List of reference numerals

- 10: communication device
- 12: cooking appliance
- 14: output unit
- 16: input unit
- 18: cooking hob
- 20: cooking oven
- 22: wireless signal connection

## Claims

1. A system for preparing and/or performing an automatic cooking process, wherein:
- the system is adapted to at least one user,
- the system comprises at least one communication device (10),
- the system comprises at least one automatic or semi-automatic cooking appliance (12),
- the cooking temperatures, cooking powers and/or cooking times of the cooking process are automatically controllable,
- the communication device (10) and the cooking appliance (12) are interconnected via at least one signal connection,
- the communication device (10) includes or has access to individual personal data of the user,
- the individual personal data of the user relates to the nutrition, tastes and/or health situation of said user, and
- the system comprises at least one automatic or semi-automatic conveying means, preferably a robot, for positioning and removing cookware in and/or on the cooking appliance (12) and/or for delivering food to the cookware.

2. The system according to claim 1,
**characterised in that**
the communication device (10) includes at least one output unit (14), at least one input unit (16) and/or at least one combined output-input unit.

3. The system according to claim 1 or 2,
**characterised in that**
the communication device (10) is a personal computer, a laptop, a notebook, a smartphone or a cellular phone or the like.

4. The system according to any one of the preceding claims,
**characterised in that**
the cooking appliance (12) is or includes at least one cooking oven, cooking hob, microwave oven, steamer, 3D printer and/or the like.

5. The system according to any one of the preceding claims,
**characterised in that**
the individual personal data of the user includes information about the relationship between the energy fed to the human body and the energy spent by workout and living of said human body, wherein preferably the individual personal data of the user includes the blood pressure, pulse, weight, body fat relation, energy consumed by food during last days and/or workouts of said user.

6. The system according to any one of the preceding claims,
**characterised in that**
the individual personal data of the user includes the user's taste, a table listing the kinds of food and/or ingredients, which the user likes and/or dislikes, and/or the nutrition of said user.

7. The system according to any one of the preceding claims,
**characterised in that**
the system comprises at least one store for storing a stock of food, wherein the conveying means delivers food from said store to the cookware, and wherein preferably the system comprises at least one reading device for reading a label identifying the food.

8. A method for preparing and/or performing an automatic cooking process, wherein:
- the method is adapted to at least one user,
- the method is controlled by at least one communication device (10),
- the cooking process is performed by at least one automatic or semi-automatic cooking appliance (12),
- the cooking temperatures, cooking powers and/or cooking times of the cooking process are automatically controlled,
- the communication device (10) and the cooking appliance (12) are interconnected via at least one signal connection,
- individual personal data of the user are used for preparing and/or performing the automatic cooking process,
- the individual personal data of the user relates to the nutrition, tastes and/or health situation of said user,
- the cookware is positioned and/or removed in and/or on the cooking appliance (12) by automatic or semi-automatic conveying means, and
- the food is delivered by automatic or semi-automatic conveying means.

9. The method according to claim 8,
**characterised in that**
the method is controlled by a personal computer, a laptop, a notebook, a smartphone or a cellular phone or the like.

10. The method according to claim 8 or 9,
**characterised in that**
the cooking process is performed by at least one cooking oven, cooking hob, microwave oven, steamer and/or the like.

11. The method according to any one of the claims 8 to 10,
**characterised in that**
the food and its properties are selected by the user via the communication device (10).

12. The method according to any one of the claims 8 to 11,
**characterised in that**
the preparing and/or performing of the automatic cooking process bases on information about the relationship between the energy fed to the human body and the energy spent by workout and living of said human body, wherein preferably the preparing and/or performing of the automatic cooking process bases on the blood pressure, pulse, weight, body fat relation, energy consumed by food during last days, workouts and the like of said user.

13. The method according to any one of the claims 8 to 12,
**characterised in that**
the preparing and/or performing of the automatic cooking process bases on the user's taste, a table listing the kinds of food and/or ingredients, which the user likes and/or dislikes, and/or the nutrition of said user.

14. The method according to any one of the claims to,
**characterised in that**
a stock of food is stored and administrated, wherein preferably the food is delivered from said store to the cookware by the conveying means.

15. The method according to claim 14,
**characterised in that**
a shopping list is automatically created on the basis of the stock of food in the store.
